# FASCICULE DE BREVET EUROPEEN

(11) **EP 1 180 301 B1**
(45) Date de publication et mention de la délivrance du brevet: **27.04.2005**
(21) Numéro de dépôt: 00937001.6
(22) Date de dépôt: 02.06.2000
(51) Int. Cl.: H04M 11/04, G08B 25/10

(54) **SYSTEME LOCAL COMBINE DE TELEPHONIE ET D'ALARME**
LOKALES KOMBINIERTES TELEFON- UND ALARMSYSTEM
LOCAL COMBINED TELEPHONE AND ALARM SYSTEM

(30) Priorité: 03.06.1999 FR 9907005
(43) Date de publication de la demande: 20.02.2002
(73) Titulaire: INVENTEL, 75005 Paris (FR)
(72) Inventeur: LEWINER, Jacques, F-92210 Saint-Cloud (FR); CARREEL, Eric, F-92190 Meudon (FR); LANGLOIS, Gérard, F-06400 Cannes (FR)
(74) Mandataire: Burbaud, Eric
(86) Numéro de dépôt international: PCT/FR2000/001527
(87) Numéro de publication internationale: WO 2000/075891

(56) Documents cités:
- EP-A- 0 817 147
- DE-A- 19 634 675

## Description

La présente invention est relative aux systèmes locaux combinés de téléphonie et d'alarme.

Plus particulièrement, l'invention concerne un système local combiné de téléphonie et d'alarme, comprenant :
- une base centrale incluant :
   a) des moyens de communication radio bidirectionnelle,
   b) une unité centrale électronique adaptée pour faire fonctionner les moyens de communication radio de la base selon un protocole de communication locale numérique, ce protocole étant bidirectionnel et à accès multiple (autrement dit, ce protocole permet à la base de communiquer en émission et en réception, "simultanément" avec plusieurs de ses périphériques, cet accès multiple pouvant être obtenu notamment par division temporelle [protocoles de type TDMA] et/ou par fréquences porteuses multiples, ou encore par étalement de spectre),
   c) et une liaison permettant de communiquer avec un réseau téléphonique public,
- et des périphériques comprenant au moins un détecteur adapté pour détecter au moins une situation d'urgence prédéterminée et pour communiquer par radio avec la base selon ledit protocole de communication locale, ce détecteur étant adapté pour envoyer un message d'alarme à la base lorsqu'il détecte ladite situation d'urgence, et l'unité centrale de la base étant adaptée pour commander au moins une réaction d'alarme lorsqu'elle reçoit le message d'alarme du détecteur, l'unité centrale de la base étant également adaptée pour communiquer par radio avec au moins un poste téléphonique (effectivement présent ou non) selon le protocole de communication locale.

Un exemple d'un tel système local combiné de téléphonie et d'alarme, utilisant le protocole de communication DECT (défini notamment dans les normes ETS 300 175-1 à ETS 300 175-9 édictées par l'ETSI) pour la liaison radio de la base avec les postes téléphoniques et les détecteurs, a été décrit par A. Carminé ("Multimedia over DECT : the enabling technology for multi-application wireless systems", Philips telecommunication review, vol. 52, N°4, octobre 1995, pp 9-11).

Un avantage de ce système est de combiner dans un même appareil d'une part, les fonctions d'une base centrale de réseau local de téléphonie sans fil, et d'autre part, les fonctions d'une centrale d'alarme, d'où un gain au niveau du coût de revient et de l'encombrement du système. De plus, du fait que le protocole de communication locale est à accès multiple, les différents appareils communiquant avec la base ne se gênent pas entre eux.

Toutefois, en tant que système d'alarme, ce système connu présente un degré de fiabilité insuffisant, dans la mesure où aucun message d'alarme ne parvient à la base en cas de défaillance du détecteur.

Cette situation peut se produire en particulier :
- en cas de panne du détecteur,
- et, lorsqu'il s'agit d'un détecteur d'intrusion, si un cambrioleur parvient à détruire ce détecteur avant qu'il n'ait eu le temps d'émettre son message d'alarme vers la base.

La présente invention a notamment pour but de pallier cet inconvénient.

A cet effet, selon l'invention, un système local combiné de téléphonie et d'alarme du genre en question est caractérisé :
- en ce que l'unité centrale de la base est adaptée pour faire émettre par les moyens de communication de ladite base, à intervalles de temps réguliers, des messages de scrutation à destination du détecteur,
- et en ce que le détecteur est adapté pour envoyer un message d'acquit à la base chaque fois qu'il reçoit un message de scrutation,
- et en ce que l'unité centrale de la base est adaptée pour vérifier si la base a bien reçu le message d'acquit correspondant à chaque message de scrutation, et pour repérer le détecteur comme défaillant et déclencher au moins une réaction de contrôle prédéterminée si le message d'acquit correspondant à un message de scrutation n'est pas reçu par la base dans un délai prédéterminé après l'émission dudit message de scrutation (cette réaction de contrôle est adaptée pour déterminer directement ou faire déterminer si le détecteur est simplement en panne ou s'il est nécessaire de déclencher une réaction d'alarme).

Grâce à ces dispositions, les défaillances naturelles ou provoquées des détecteurs sont repérées très rapidement par la base, qui peut alors réagir de façon adéquate, par exemple :
- en signalant ce défaut à un poste de télésurveillance doté de moyens humains pour vérifier la situation,
- et/ou en vérifiant directement si plusieurs détecteurs sont devenus simultanément défaillants, pour déterminer ainsi s'il convient de déclencher immédiatement l'alarme, etc.

Dans des modes de réalisation préférés de l'invention, on peut éventuellement avoir recours en outre à l'une et/ou à l'autre des dispositions suivantes :
- le protocole de communication locale prévoit de diviser temporellement les communications radio en trames elles-mêmes regroupées en ensembles de trames successifs de durée prédéterminée inférieure à 1 s, chaque ensemble de trames comportant, pour chaque périphérique, un créneau temporel d'appel de durée très inférieure à ladite durée prédéterminée, au cours duquel la base est susceptible d'émettre au moins une partie d'un message d'appel à destination dudit récepteur,
- au moins le détecteur est autonome électriquement et est adapté pour prendre soit un état de veille où ledit détecteur communique avec la base centrale, soit un état de sommeil où ledit détecteur ne peut pas communiquer avec ladite base centrale, le détecteur étant adapté pour rester la majeure partie du temps en état de sommeil et pour passer en état de veille uniquement :
   . soit lorsque le capteur du détecteur détecte ladite situation d'urgence prédéterminée,
   . soit tous les n ensembles de trames pendant le créneau temporel d'appel correspondant audit détecteur, n étant un nombre entier au moins égal à 3,
- et la base est adaptée pour émettre ces messages de scrutation à destination du détecteur pendant n ensembles de trames successifs ;
- le protocole de communication locale est le protocole DECT, la durée de chaque ensemble de trames est de 640 ms, et n est égal à 3 ;
- le système local combiné de téléphonie et d'alarme comporte en outre au moins un poste téléphonique adapté pour communiquer par radio avec la base selon le protocole de communication locale ;
- chaque message de scrutation envoyé par la base au détecteur constitue une demande d'établissement de communication bidirectionnelle adressée spécifiquement à ce détecteur, le message d'acquit renvoyé par le détecteur étant constitué par l'établissement de ladite communication bidirectionnelle par ce détecteur avec la base ;
- chaque message de scrutation envoyé par la base au détecteur constitue un message de radio-messagerie unilatérale adressé à l'ensemble des périphériques et contenant un code prédéterminé demandant au moins au détecteur d'établir une communication bidirectionnelle avec la base, le message d'acquit renvoyé par le détecteur étant constitué par l'établissement de ladite communication bidirectionnelle par ce détecteur avec la base ;
- chaque message de scrutation envoyé par la base au détecteur consiste en un établissement par cette base d'une communication bidirectionnelle avec ce détecteur, le message d'acquit renvoyé par le détecteur étant constitué par au moins un message reçu du détecteur et confirmant le bon établissement de ladite communication bidirectionnelle ;
- les intervalles de temps séparant deux messages de scrutation a destination du détecteur, sont inférieurs à 3 minutes ;
- l'unité centrale de la base est adaptée pour communiquer avec un centre de télésurveillance, lesdites réactions d'alarme et de contrôle comprenant chacune la mise en communication de la base avec le centre de télésurveillance, et l'unité centrale étant agencée pour, lorsqu'elle déclenche l'une de ces réactions d'alarme et de contrôle et que la liaison avec le réseau téléphonique public est déjà occupée par une communication autre qu'avec le centre de télésurveillance, interrompre cette communication : on garantit ainsi la priorité de la communication avec le centre de télésurveillance sur toute autre communication, sans avoir à effectuer aucun branchement particulier de la base, même lorsque ladite base communique avec le réseau téléphonique public par liaison filaire ;
- le système local combiné de téléphonie et d'alarme comporte en outre au moins un dispositif de surveillance visuelle qui comprend une caméra électronique et qui est adapté pour communiquer par radio avec la base selon le protocole de communication locale, de façon à capter des images et à les transmettre à ladite base, la base étant adaptée pour retransmettre ces images au centre de télésurveillance ;
- le système local combiné de téléphonie et d'alarme comporte en outre au moins un dispositif de surveillance acoustique qui comprend un micro et qui est adapté pour communiquer par radio avec la base selon le protocole de communication locale, de façon à capter des sons et à les transmettre à ladite base, la base étant adaptée pour retransmettre ces sons au centre de télésurveillance ;
- le système local combiné de téléphonie et d'alarme comprend plusieurs détecteurs, l'unité centrale de la base étant adaptée pour :
   . mémoriser les détecteurs défaillants ainsi que les instants auxquels ils sont devenus défaillants,
   . lorsque ladite unité centrale de la base repère un détecteur comme défaillant et déclenche la réaction de contrôle, vérifier s'il existe des détecteurs défaillants parmi les autres détecteurs,
   . et dans l'affirmative, déclencher ladite réaction d'alarme en fonction du nombre de détecteurs défaillants et de la chronologie des défaillances ;
- le système combiné de téléphonie et d'alarme comporte en outre un dispositif d'interface permettant de communiquer avec un opérateur humain, ce dispositif d'interface étant adapté pour communiquer avec l'unité centrale de la base selon le protocole de communication locale, et l'unité centrale de la base étant adaptée pour envoyer à ce dispositif d'interface des messages de panne à chaque fois qu'un détecteur est repéré comme défaillant ;
- le système comporte en outre au moins un boîtier portatif d'appel de détresse qui est adapté pour communiquer par radio avec la base selon le protocole de communication locale et qui comprend des moyens de déclenchement d'appel de détresse, un haut-parleur et un micro.

D'autres caractéristiques et avantages de l'invention apparaîtront au cours de la description suivante d'une de ses formes de réalisation, donnée à titre d'exemple non limitatif, en regard des dessins joints.

Sur les dessins :

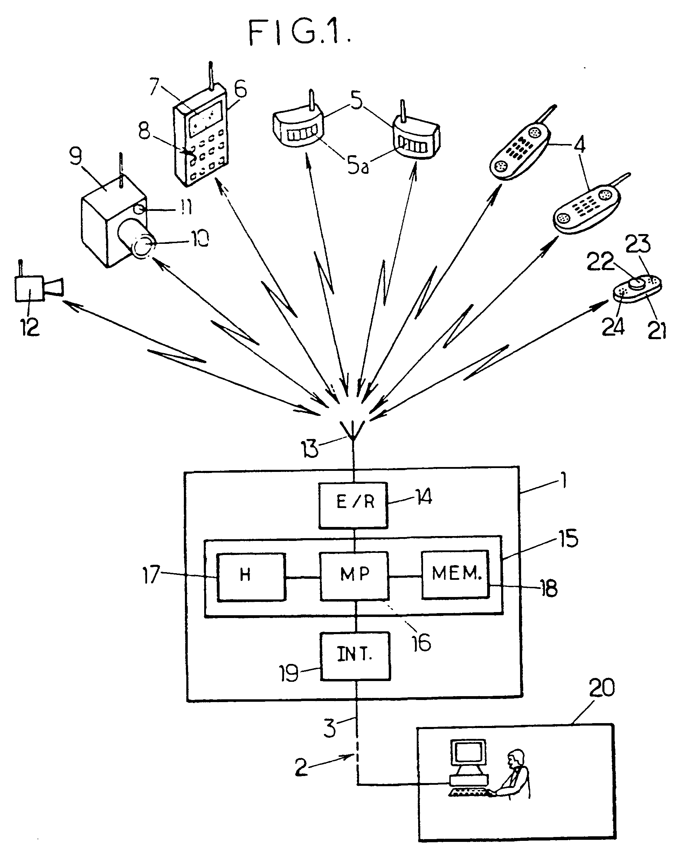

- la figure 1 est un schéma de principe d'un système local combiné de téléphonie et d'alarme, selon une forme de réalisation de l'invention,
- et la figure 2 est un schéma bloc d'un détecteur du système de téléphone et d'alarme de la figure 1.

Le système local combiné de téléphonie et d'alarme comprend :
- d'une part, une base centrale 1 qui est généralement fixe et reliée au réseau téléphonique public 2 (réseau téléphonique commuté) par une liaison filaire 3, la base 1 pouvant toutefois le cas échéant être mobile et reliée au réseau téléphonique public 2 par une liaison radio (dans tous les cas, la base centrale 1 communique directement avec le réseau public 2, selon le protocole de communication propre à ce réseau public, qui est généralement différent du protocole de communication locale décrit ci-après).
- et d'autre part, une pluralité de périphériques fixes ou mobiles comprenant par exemple :
   . un ou plusieurs téléphones portables 4,
   . plusieurs détecteurs, dont certains 5, comprennent des capteurs 5a adaptés pour détecter des situations d'urgence tel qu'une intrusion, un incendie, une inondation, etc., au moins un des détecteurs pouvant le cas échéant être constitué par un boîtier portatif d'appel de détresse 21 déclenchable manuellement par un utilisateur au moyen d'un bouton 22, ce boîtier portatif 21 comprenant avantageusement en outre un haut-parleur 23 et un micro 24,
   . un dispositif d'interface 6 comprenant par exemple un écran 7 et un clavier 8, ou des moyens d'émission sonore associés à un dispositif de reconnaissance vocale,
   . un ou plusieurs dispositifs de surveillance visuelle et et/ou sonore comprenant chacun une caméra électronique 10 et/ou un micro 11,
   . une ou plusieurs sirènes 12, etc.

L'unité centrale est adaptée pour communiquer avec chacun des périphériques 4, 5, 6, 9, 12 par radio, selon un protocole de communication locale bidirectionnel et à accès multiple.

Ce protocole de communication locale est de préférence le protocole DECT susmentionné, dans lequel l'accès multiple, c'est-à-dire la communication "simultanée" entre la base et les différents périphériques 4 ,5, 6, 9, 12, 21 est obtenu par division temporelle et par fréquences porteuses multiples. En variante, il serait également possible d'utiliser le protocole de communication "Bluetooth" élaboré en coopération notamment par les sociétés ERICSON, IBM, INTEL, NOKIA et TOSHIBA.

Afin de permettre cette communication radio, l'unité centrale 1 comporte notamment, de façon classique:
- une antenne 13,
- un dispositif électronique d'émission et de réception 14 (E/R) adapté notamment pour moduler et amplifier les signaux électriques envoyés vers l'antenne 13 et pour amplifier et démoduler les signaux radio reçus par ladite antenne,
- une unité centrale électronique 15 comprenant par exemple un microprocesseur ou microcontrôleur 16 (MP) relié au dispositif électronique d'émission et de réception 14 ainsi qu'à une horloge 17 (H) et à une mémoire 18 (MEM.), l'unité centrale électronique 15 pouvant le cas échéant former un seul circuit intégré,
- et une interface de communication 19 (INT.) reliée à la ligne téléphonique 3.

Par ailleurs, chacun des périphériques 4, 5, 6, 9, 12 comporte également, de façon similaire à la base 1, une antenne, un dispositif électronique d'émission et de réception, et une unité centrale électronique comprenant par exemple un microprocesseur ou microcontrôleur relié à une horloge et à une mémoire.

Le système qui vient d'être décrit fonctionne comme suit (le fonctionnement du système comme réseau téléphonique local est classique, et ne sera pas décrit ici, étant entendu que ce sont les mêmes composants qui dans la base 1 assurent à la fois les fonctions de téléphonie et de centrale d'alarme).

Lorsque l'un des détecteurs 5 détecte une situation d'urgence, il établit un lien bidirectionnel (communication bidirectionnelle) par voie radio avec la base 1 pour lui délivrer un message d'alarme.

A son tour, l'unité centrale 15 de la base déclenche une réaction d'alarme telle que par exemple le fonctionnement de la sirène 12 (commandée par radio) et/ou l'établissement d'une liaison avec un centre de télésurveillance 20 (doté ou non d'un opérateur humain), par l'intermédiaire du réseau téléphonique 2.

Une fois cette dernière liaison établie, l'opérateur humain présent au centre de télésurveillance 20 (si ce centre est doté de moyens humains) dépêche une personne vers le local où est situé le système de téléphonie et d'alarme, et/ou contrôle la situation à distance. A cet effet, l'unité centrale 15 peut avantageusement être programmée pour commander (par voie radio) le fonctionnement du dispositif de surveillance 9 afin de recevoir les images et/ou le son captés par ce dispositif de surveillance, et pour retransmettre ces images et/ou ce son au centre de télésurveillance 20 (automatiquement ou sur demande du centre de télésurveillance).

Afin de garantir la fiabilité du système vis-à-vis des défaillances naturelles ou provoquées des détecteurs 5 ou 21, l'unité centrale 15 de la base est adaptée pour vérifier à intervalles de temps réguliers, par exemple inférieurs à 10 minutes et de préférence inférieurs à 3 minutes, voire inférieurs à une minute, le bon fonctionnement des détecteurs 5.

Pour cela, de façon générale, l'unité centrale 15 de la base provoque, à intervalles de temps réguliers, l'émission de messages de scrutation de la base 1 vers les détecteurs 5, 21 et surveille la réception par ladite base de messages d'acquit renvoyés par les détecteurs 5, 21.
Avec le protocole DECT, cet échange de messages peut se faire notamment de l'une des trois façons suivantes :
- chaque message de scrutation envoyé par la base constitue une demande d'établissement de lien bidirectionnel adressée spécifiquement à un détecteur, le message d'acquit renvoyé par le détecteur étant constitué par l'établissement de ladite communication bidirectionnelle par ce détecteur avec la base,
- chaque message de scrutation envoyé par la base constitue un message de radio-messagerie unilatérale adressé à l'ensemble des périphériques et contenant un code prédéterminé demandant au moins aux détecteurs 5, 21 d'établir simultanément un lien bidirectionnel avec la base, le message d'acquit renvoyé par chaque détecteur étant constitué par l'établissement de ladite communication bidirectionnelle par ce détecteur avec la base,
- chaque message de scrutation envoyé par la base 1 consiste directement en l'établissement d'un lien bidirectionnel avec un détecteur particulier, le message d'acquit renvoyé par ce détecteur étant constitué par au moins un message d'accusé de réception (ou tout autre message reçu du détecteur) confirmant le bon établissement dudit lien bidirectionnel.

Si l'unité centrale 15 ne détecte pas de message d'acquit provenant d'un ou plusieurs détecteurs 5,21 dans un temps prédéterminé (par exemple 1 s., voire beaucoup moins) suivant l'émission du message de scrutation correspondant :
- elle repère ce détecteur comme défaillant et mémorise l'identité de ce détecteur avec l'instant auquel la défaillance a été repérée,
- elle peut éventuellement envoyer par radio un message de panne au dispositif d'interface 6, qui peut ultérieurement être consulté par un utilisateur,
- et elle déclenche en outre une réaction de contrôle qui peut consister notamment en l'établissement d'une liaison entre la base 1 et le centre de télésurveillance 20, lequel centre de télésurveillance peut ensuite (s'il est doté de moyens humains) soit dépêcher une personne sur place, soit contrôler la situation à distance par l'intermédiaire du dispositif de surveillance 9, comme indiqué précédemment, afin de déterminer s'il convient de déclencher une réaction d'alarme.

En plus de l'établissement de la liaison avec le centre de télésurveillance 20 ou le cas échéant à la place de l'établissement de cette liaison, la réaction de contrôle de l'unité centrale 15 peut le cas échéant consister à :
- contrôler l'état de l'ensemble des détecteurs 5, 21 dans la mémoire 18, le cas échéant après avoir déclenché un contrôle à distance des détecteurs 5, 21 et qui n'auraient pas été contrôlé depuis une durée supérieure à une durée prédéterminée, par exemple depuis 5 minutes,
- puis déclencher la réaction d'alarme susmentionnée en fonction du nombre et de la chronologie des défaillances repérées, par exemple s'il s'avère qu'un nombre prédéterminé de détecteurs, par exemple 3 détecteurs, ont été repérés comme défaillants dans un temps inférieur à une durée prédéterminée, par exemple 10 minutes.

Par ailleurs, pour garantir la priorité de la communication avec le centre de télésurveillance sur toute autre communication, l'unité centrale 15 de la base est agencée pour couper toute communication téléphonique en cours sur la ligne 3 (appel entrant ou liaison déjà établie) lorsqu'elle cherche à communiquer avec le centre de télésurveillance 20.

Enfin, la base 1 est de préférence adaptée pour, lorsqu'elle reçoit un appel du boîtier portatif 21 suite à l'actionnement du bouton 22 de ce boîtier, établir une liaison vocale bidirectionnelle entre le boîtier 21 et l'opérateur humain du centre de télésurveillance. De plus, cet opérateur humain peut de lui-même entrer en contact avec la personne qui porte le boîtier 21, à intervalles de temps reguliers, pour lui demander si tout va bien (cas de l'hospitalisation à domicile, par exemple).

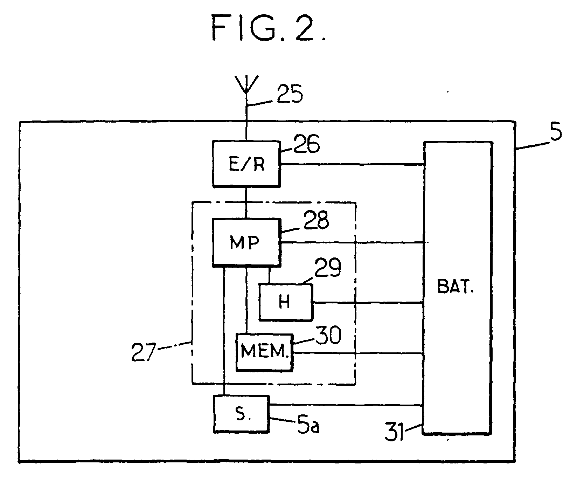

Comme representé sur la figure 2, chaque détecteur 5 peut comporter par exemple :
- une antenne 25,
- un circuit d'émission et de réception (E/R) 26,
- une unité centrale électronique 27 comprenant un microprocesseur ou microcontrôleur (MP) 28 relié au circuit d'émission et de réception 26, une horloge (H) 29 telle qu'une horloge temps réel reliée au microprocesseur 28, et une mémoire (MEM. 36 reliée au microprocesseur 28,
- le capteur 5a, relié au microprocesseur 28,
- et une pile ou une batterie électrique (BAT.) 31 adaptée pour alimenter électriquement l'ensemble des composants du détecteur 5, de façon que ce détecteur soit électriquement autonome.

Pour économiser l'énergie de la pile 31, on met à profit la structure du protocole de communication DECT, qui prévoit une division temporelle des communications radio en trames elles-mêmes regroupées en ensembles de trames ("super trames") de durée prédéterminée T généralement égale à 640 ms.

Chacun de ces ensembles de trames comporte un ou plusieurs créneaux temporels, de durée très inférieure à la durée de l'ensemble de trames, au cours duquel chaque détecteur 5 est susceptible de recevoir au moins une partie d'un message d'appel provenant de la base 1 (au cours de ce créneau temporel, le détecteur 5 peut par exemple recevoir tout ou partie d'un code d'adresse qui lui est propre et qui lui indique que les trames suivantes de l'ensemble de trames contiennent des données qui lui sont destinées).

Ces créneaux temporels sont connus à l'avance du détecteur 5, de sorte que ce détecteur 5 peut rester la majeure partie du temps dans un état de sommeil où le circuit d'émission/réception 26 est désactivé et où le microprocesseur 28 fonctionne "au ralenti" de façon à économiser la pile 31 du détecteur.

Le microprocesseur 28 est "réveillé", c'est-à-dire remis en état de fonctionnement normal, avec une plus forte consommation électrique :
- par le capteur 5a, en cas de détection d'une situation d'urgence (par exemple une intrusion),
- et par l'horloge temps réel 29, aux instants prédéterminés correspondant aux créneaux temporels susmentionnés où le détecteur 5 est susceptible de recevoir un message d'appel de la centrale 1, le réveil du microprocesseur 28 par l'horloge 29 n'étant toutefois effectué que pour le ou les créneaux temporels d'appel d'un ensemble de trames tous les n ensembles de trames, n étant au moins égal à 3.

Avantageusement, n est égal à 3, de sorte que le microprocesseur 24 du détecteur 5 est réveillé toutes les 1,92 s.

Dès que le microprocesseur 24 est en état de veille, il remet le circuit d'émission/réception 22 à l'état actif, de façon à pouvoir émettre et recevoir des messages radio.

## Revendications

1. Système local combiné de téléphonie et d'alarme, comprenant :
- une base centrale (1) incluant :
a) des moyens de communication radio bidirectionnelle (13, 14),
b) une unité centrale électronique (15) adaptée pour faire fonctionner les moyens de communication radio de la base selon un protocole de communication locale numérique, ce protocole étant bidirectionnel et à accès multiple,
c) et une liaison (3) permettant de communiquer avec un réseau téléphonique public (2),
- et des périphériques (4, 5, 6, 9, 12) comprenant au moins un détecteur (5) doté d'un capteur (5a) adapté pour détecter au moins une situation d'urgence prédéterminée et pour communiquer par radio avec la base (1) selon ledit protocole de communication locale, ce détecteur étant adapté pour envoyer un message d'alarme à la base lorsqu'il détecte ladite situation d'urgence, et l'unité centrale (15) de la base étant adaptée pour commander au moins une réaction d'alarme lorsqu'elle reçoit le message d'alarme du détecteur, l'unité centrale de la base étant également adaptée pour communiquer par radio avec au moins un poste téléphonique (4) selon le protocole de communication locale,
**caractérisé en ce que** l'unité centrale (15) de la base est adaptée pour faire émettre par les moyens de communication (13, 14) de ladite base, à intervalles de temps réguliers, des messages de scrutation à destination du détecteur (5),
**en ce que** le détecteur (5) est adapté pour envoyer un message d'acquit à la base (1) chaque fois qu'il reçoit un message de scrutation,
**et en ce que** l'unité centrale (15) de la base est adaptée pour vérifier si la base a bien reçu le message d'acquit correspondant à chaque message de scrutation, et pour repérer le détecteur (5) comme défaillant et déclencher au moins une réaction de contrôle prédéterminée si le message d'acquit correspondant à un message de scrutation n'est pas reçu par la base dans un délai prédéterminé après l'émission dudit message de scrutation.

2. Système selon la revendication 1, dans lequel :
- le protocole de communication locale prévoit de diviser temporellement les communications radio en trames elles-mêmes regroupées en ensembles de trames successifs de durée prédéterminée inférieure à 1 s, chaque ensemble de trames comportant, pour chaque périphérique (4, 5, 6, 9, 12), un créneau temporel d'appel de durée très inférieure à ladite durée prédéterminée, au cours duquel la base est susceptible d'émettre au moins une partie d'un message d'appel à destination dudit récepteur,
- au moins le détecteur (5) est autonome électriquement et est adapté pour prendre soit un état de veille où ledit détecteur communique avec la base centrale (1), soit un état de sommeil où ledit détecteur ne peut pas communiquer avec ladite base centrale (1), le détecteur (5) étant adapté pour rester la majeure partie du temps en état de sommeil et pour passer en état de veille uniquement :
. soit lorsque le capteur (5a) du détecteur détecte ladite situation d'urgence prédéterminée,
. soit tous les n ensembles de trames pendant le créneau temporel d'appel correspondant audit détecteur (5), n étant un nombre entier au moins égal à 3,
- et la base (1) est adaptée pour émettre ces messages de scrutation à destination du détecteur (5) pendant n ensembles de trames successifs.

3. Système selon la revendication 2, dans lequel le protocole de communication locale est le protocole DECT, la durée de chaque ensemble de trames est de 640 ms, et n est égal à 3.

4. Système selon l'une quelconque des revendications précédentes, comprenant en outre au moins un poste téléphonique (4) adapté pour communiquer par radio avec la base (1) selon le protocole de communication locale.

5. Système selon l'une quelconque des revendications précédentes, dans lequel chaque message de scrutation envoyé par la base (1) au détecteur (5) constitue une demande d'établissement de communication bidirectionnelle adressée spécifiquement à ce détecteur, le message d'acquit renvoyé par le détecteur étant constitué par l'établissement de ladite communication bidirectionnelle par ce détecteur avec la base.

6. Système selon l'une quelconque des revendications 1 à 4, dans lequel chaque message de scrutation envoyé par la base (1) au détecteur (5) constitue un message de radio-messagerie unilatérale adressé à l'ensemble des périphériques et contenant un code prédéterminé demandant au moins au détecteur d'établir une communication bidirectionnelle avec la base, le message d'acquit renvoyé par le détecteur étant constitué par l'établissement de ladite communication bidirectionnelle par ce détecteur avec la base.

7. Système selon l'une quelconque des revendications 1 à 4, dans lequel chaque message de scrutation envoyé par la base (1) au détecteur (5) consiste en un établissement par cette base d'une communication bidirectionnelle avec ce détecteur, le message d'acquit renvoyé par le détecteur étant constitué par au moins un message reçu du détecteur (5) et confirmant le bon établissement de ladite communication bidirectionnelle.

8. Système selon l'une quelconque des revendications précédentes, dans lequel les intervalles de temps séparant deux messages de scrutation à destination du détecteur (5), sont inférieurs à 3 minutes.

9. Système selon l'une quelconque des revendications précédentes, dans lequel l'unité centrale (15) de la base est adaptée pour communiquer avec un centre de télésurveillance (20), lesdites réactions d'alarme et de contrôle comprenant chacune la mise en communication de la base (1) avec le centre de télésurveillance, et l'unité centrale étant adaptée pour, lorsqu'elle déclenche l'une de ces réactions d'alarme et de contrôle et que la liaison (3) avec le réseau téléphonique public est déjà occupée par une communication autre qu'avec le centre de télésurveillance, interrompre cette communication.

10. Système selon la revendication 9, comportant en outre au moins un dispositif de surveillance visuelle (9) qui comprend une caméra électronique (10) et qui est adapté pour communiquer par radio avec la base (1) selon le protocole de communication locale, de façon à capter des images et à les transmettre à ladite base, la base étant adaptée pour retransmettre ces images au centre de télésurveillance (20).

11. Système selon la revendication 9 ou la revendication 10, comportant en outre au moins un dispositif de surveillance acoustique (9) qui comprend un micro (11) et qui est adapté pour communiquer par radio avec la base (1) selon le protocole de communication locale, de façon à capter des sons et à les transmettre à ladite base, la base étant adaptée pour retransmettre ces sons au centre de télésurveillance (20).

12. Système selon l'une quelconque des revendications précédentes, comportant plusieurs détecteurs (5), l'unité centrale (15) de la base étant adaptée pour :
. mémoriser les détecteurs (5) défaillants ainsi que les instants auxquels ils sont devenus défaillants,
. lorsque ladite unité centrale (15) de la base repère un détecteur comme défaillant et déclenche la réaction de contrôle, vérifier s'il existe des détecteurs défaillants parmi les autres détecteurs,
. et dans l'affirmative, déclencher ladite réaction d'alarme en fonction du nombre de détecteurs défaillants et de la chronologie des défaillances.

13. Système selon l'une quelconque des revendications précédentes, comportant en outre un dispositif d'interface (6) permettant de communiquer avec un opérateur humain, ce dispositif d'interface étant adapté pour communiquer avec l'unité centrale (15) de la base selon le protocole de communication locale, et l'unité centrale de la base étant adaptée pour envoyer à ce dispositif d'interface des messages de panne à chaque fois qu'un détecteur (5) est repéré comme défaillant.

14. Système selon l'une quelconque des revendications précédentes, comportant en outre au moins un boîtier portatif (21) d'appel de détresse qui est adapté pour communiquer par radio avec la base (1) selon le protocole de communication locale et qui comprend des moyens de déclenchement d'appel de détresse (22), un haut-parleur (23) et un micro (24).

## Patentansprüche

1. Lokales kombiniertes Telefon- und Alarmsystem, umfassend:
- eine zentrale Basis (1), umfassend:
a) bidirektionale Funkkommunikationsmittel (13, 14),
b) eine zentrale Elektronikeinheit (15), die derart ausgeführt ist, dass sie die Funkkommunikationsmittel der Basis nach einem lokalen digitalen Kommunikationsprotokoll arbeiten lässt, wobei dieses Protokoll bidirektional und mit Mehrfachzugriff ist,
c) und eine Verbindung (3), die es ermöglicht, mit einem öffentlichen Telefonnetz (2) zu kommunizieren,
- und Peripheriegeräte (4, 5, 6, 9, 12), umfassend mindestens einen Detektor (5), der mit einem Fühler (5a) ausgestattet ist, der derart ausgeführt ist, dass er mindestens eine vorbestimmte Notsituation erfasst und per Funk mit der Basis (1) nach dem lokalen Kommunikationsprotokoll kommuniziert, wobei dieser Detektor derart ausgeführt ist, dass er eine Alarmmeldung an die Basis sendet, wenn er die Notsituation erfasst, und wobei die Zentraleinheit (15) der Basis derart ausgeführt ist, dass sie mindestens eine Alarmreaktion steuert, wenn sie die Alarmmeldung vom Detektor empfängt, wobei die Zentraleinheit der Basis auch derart ausgeführt ist, dass sie per Funk mit mindestens einer Telefonstation (4) nach dem lokalen Kommunikationsprotokoll kommuniziert,
**dadurch gekennzeichnet, dass** die Zentraleinheit (15) der Basis derart ausgeführt ist, dass sie durch die Kommunikationsmittel (13, 14) dieser Basis in regelmäßigen Zeitintervallen Prüfmeldungen in Richtung des Detektors (5) senden lässt, dass der Detektor (5) derart ausgeführt ist, dass er eine Bestätigungsmeldung an die Basis (1) immer dann sendet, wenn er eine Prüfmeldung empfängt,
und dass die Zentraleinheit (15) der Basis derart ausgeführt ist, dass sie überprüft, ob die Basis die Bestätigungsmeldung, die jeder Prüfmeldung entspricht, ordnungsgemäß empfangen hat, und dass sie den Detektor (5) als fehlerhaft erkennt und mindestens eine vorbestimmte Kontrollreaktion auslöst, wenn die einer Prüfmeldung entsprechende Bestätigungsmeldung nicht von der Basis innerhalb einer vorbestimmten Frist nach Entsendung der Prüfmeldung empfangen wird.

2. System nach Anspruch 1, bei dem:
- das lokale Kommunikationsprotokoll vorsieht, die Funkkommunikationen zeitlich in Raster zu unterteilen, die selbst zu aufeinander folgenden Rastereinheiten mit einer vorbestimmten Dauer von weniger als 1 s zusammengefasst sind, wobei jede Rastereinheit für jedes Peripheriegerät (4, 5, 6, 9, 12) einen Rufzeitimpuls mit einer Dauer deutlich unter der vorbestimmten Dauer umfasst, währenddessen die Basis mindestens einen Teil einer Rufmeldung in Richtung des Empfängers entsenden kann,
- mindestens der Detektor (5) elektrisch autonom und derart ausgeführt ist, dass er entweder einen Bereitschaftszustand, in dem der Detektor mit der zentralen Basis (1) kommuniziert, oder einen Ruhezustand einnimmt, in dem der Detektor nicht mit der zentralen Basis (1) kommunizieren kann, wobei der Detektor (5) derart ausgeführt ist, um den Großteil der Zeit im Ruhezustand zu verbleiben und in den Bereitschaftszustand nur dann überzugehen:
wenn entweder der Fühler (5a) des Detektors die vorbestimmte Notsituation erfasst,
oder alle n Rastereinheiten während des dem Detektor (5) entsprechenden Rufzeitimpulses, wobei n eine ganze Zahl mindestens gleich 3 ist,
- und die Basis (1) derart ausgeführt ist, dass sie diese Prüfmeldungen in Richtung des Detektors (5) währen n aufeinander folgenden Rastereinheiten entsendet.

3. System nach Anspruch 2, bei dem das lokale Kommunikationsprotokoll das Protokoll DECT ist, die Dauer jeder Rastereinheit 640 ms beträgt und n gleich 3 ist.

4. System nach einem der vorhergehenden Ansprüche, umfassend ferner mindestens eine Telefonstation (4), die derart ausgeführt ist, dass sie per Funk mit der Basis (1) nach dem lokalen Kommunikationsprotokoll kommuniziert.

5. System nach einem der vorhergehenden Ansprüche, bei dem jede von der Basis (1) an den Detektor (5) gesandte Prüfmeldung einen Antrag auf Herstellung einer bidirektionalen Kommunikation, die spezifisch an diesen Detektor gerichtet ist, darstellt, wobei die von dem Detektor zurückgesandte Bestätigungsmeldung von der Herstellung dieser bidirektionalen Kommunikation durch diesen Detektor mit der Basis gebildet ist.

6. System nach einem der Ansprüche 1 bis 4, bei dem jede von der Basis (1) an den Detektor (5) gesandte Prüfmeldung eine unilaterale Funkmeldung darstellt, die an die Gesamtheit der Peripheriegeräte gerichtet ist und einen vorbestimmten Code enthält, der mindestens einen Detektor dazu auffordert, eine bidirektionale Kommunikation mit der Basis herzustellen, wobei die von dem Detektor gesandte Bestätigungsmeldung von der Herstellung der bidirektionalen Kommunikation durch diesen Detektor mit der Basis gebildet ist.

7. System nach einem der Ansprüche 1 bis 4, bei dem jede von der Basis (1) an den Detektor (5) gesandte Prüfmeldung in einer Herstellung einer bidirektionalen Kommunikation mit diesem Detektor durch die Basis besteht, wobei die von dem Detektor zurückgesandte Bestätigungsmeldung von mindestens einer vom Detektor (5) empfangenen Botschaft gebildet ist und die ordnungsgemäße Herstellung dieser bidirektionalen Kommunikation bestätigt.

8. System nach einem der vorhergehenden Ansprüche, bei dem die Zeitintervalle zwischen zwei Prüfmeldungen in Richtung des Detektors (5) geringer als 3 Minuten sind.

9. System nach einem der vorhergehenden Ansprüche, bei dem die Zentraleinheit (15) der Basis derart ausgeführt ist, dass sie mit einem Fernüberwachungszentrum (20) kommuniziert, wobei die Alarm- und Kontrollreaktionen jeweils die Herstellung einer Verbindung der Basis (1) mit dem Fernüberwachungszentrum umfassen, und wobei die Zentraleinheit derart ausgeführt ist, dass sie, wenn sie eine dieser Alarm- oder Kontrollreaktionen auslöst und die Verbindung (3) mit dem öffentlichen Telefonnetz bereits von einer anderen Kommunikation als jener mit dem Fernüberwachungszentrum belegt ist, diese Kommunikation unterbricht.

10. System nach Anspruch 9, ferner umfassend mindestens eine visuelle Überwachungseinrichtung (9), die eine elektronische Kamera (10) umfasst und derart ausgeführt ist, dass sie per Funk mit der Basis (1) nach dem lokalen Kommunikationsprotokoll kommuniziert, um Bilder zu erfassen und diese an die Basis zu übertragen, wobei die Basis derart ausgeführt ist, dass sie diese Bilder wieder an das Fernüberwachungszentrum (20) zurück überträgt.

11. System nach Anspruch 9 oder Anspruch 10, ferner umfassend mindestens eine akustische Überwachungseinrichtung (9), die ein Mikrofon (11) umfasst und derart ausgeführt ist, dass sie per Funk mit der Basis (1) nach dem lokalen Kommunikationsprotokoll kommuniziert, um Töne zu erfassen und sie an die Basis zu übertragen, wobei die Basis derart ausgeführt ist, dass sie diese Töne an das Fernüberwachungszentrum (20) zurück überträgt.

12. System nach einem der vorhergehenden Ansprüche, umfassend mehrere Detektoren (5), wobei die Zentraleinheit (15) der Basis derart ausgeführt ist, dass sie:
- die fehlerhaften Detektoren (5) sowie die Zeitpunkte, zu denen sie fehlerhaft geworden sind, speichert,
- wenn die Zentraleinheit (15) der Basis einen Detektor als fehlerhaft erfasst und die Kontrollreaktion auslöst, überprüft, ob unter den anderen Detektoren fehlerhafte Detektoren vorhanden sind,
- wenn dies der Fall ist, die Alarmreaktion in Abhängigkeit von der Anzahl von fehlerhaften Detektoren und der Chronologie der Ausfälle auslöst.

13. System nach einem der vorhergehenden Ansprüche, ferner umfassend eine Schnittstelleneinrichtung (6), die es ermöglicht, mit einer Bedienperson zu kommunizieren, wobei diese Schnittstelleneinrichtung derart ausgeführt ist, dass sie mit der Zentraleinheit (15) der Basis nach dem lokalen Kommunikationsprotokoll kommuniziert, und wobei die Zentraleinheit der Basis derart ausgeführt ist, dass sie an diese Schnittstelleneinrichtung Pannenmeldungen immer dann sendet, wenn ein Detektor (5) als fehlerhaft erfasst wird.

14. System nach einem der vorhergehenden Ansprüche, ferner umfassend mindestens ein tragbares Notrufgehäuse (21), das derart ausgeführt ist, dass es per Funk mit der Basis (1) nach dem lokalen Kommunikationsprotokoll kommuniziert, und das Mittel (22) zum Auslösen des Notrufes, einen Lautsprecher (23) und ein Mikrofon (24) umfasst.

## Claims

1. Local combined telephone and alarm system, comprising :
- a central base (1) including :
a) two-way radio communication means (13, 14),
b) a central electronic unit (15) adapted to make the radio communication means of the base work according to a numeric local communication protocol, this protocol being two-way and multiple access,
c) and a link (3) which allows communication with a public telephone network (2),
- and peripherals (4, 5, 6, 9, 12) including at least one detector (5) equipped with a sensor (5a) adapted to detect at least one predetermined emergency situation and to communicate with the base (1) by radio according to said local communication protocol, this detector being adapted to send an alarm message to the base when it detects said emergency situation, and the central unit (15) of the base being adapted to provoke at least one alarm reaction when it receives the alarm message from the detector, the central unit of the base being also adapted to communicate by radio with at least one telephone set (4) according to the local communication protocol,
**characterized in that** the base central unit (15) is adapted to make the communication means (13, 14) of said base emit, at regular time intervals, scanning messages to the detector (5),
**in that** the detector (5) is adapted to send an acknowledgement message to the base (1) each time it receives a scanning message,
and **in that** the base central unit (15) is adapted to check whether the base has successfully received the corresponding acknowledgement message for each scanning message, and to identify the defective detector (5) and activate at least one predetermined checking reaction if the acknowledgement message corresponding to a scanning message is not received by the base within a predetermined time period after the emission of said scanning message.

2. System according to claim 1, in which :
- the local communication protocol makes provision for time dividing the radio communications in frames themselves regrouped in sets of successive frames of predetermined duration, inferior to 1 s, each set of frames comprising, for each peripheral (4, 5, 6, 9, 12), a call time slot duration much inferior to said predetermined duration, during the course of which the base is capable of emitting at least part of a call message to said receptor,
- at least the detector (5) is electrically autonomous and is adapted to be either in an active state where said detector communicates with the central base (1), or in a stand-by state where said detector cannot communicate with said central base (1), the detector (5) being adapted to remain in a stand-by state for the majority of time and go into an active state uniquely :
. either when the detector's sensor (5a) detects said predetermined emergency situation,
. or after every n sets of frames during the call time slot corresponding to said detector (5), n being an integer at least equal to 3,
- and the base (1) is adapted to emit said scanning messages to the detector (5) during n sets of successive frames.

3. System according to claim 2, in which the local communication protocol is the DECT protocol, the duration of each set of frames being 640 ms, and n being equal to 3.

4. System according to any of the previous claims, including in addition at least one telephone set (4) adapted to radio communicate with the base (1) according to the local communication protocol.

5. System according to any of the previous claims, in which each scanning message sent by the base (1) to the detector (5) constitutes a request for establishment of two-way communication addressed specifically to said detector, the acknowledgement message sent back by the detector being constituted by the establishment of said two-way communication between the detector and the base.

6. System according to any one of the preceding claims, in which each scanning message sent by the base (1) to the detector (5) constitutes a unilateral paging message addressed to all the peripherals, containing a predetermined code asking at least one detector to establish two-way communication with the base, the acknowledgement message sent back by the detector being constituted by the establishment of said two-way communication between said detector and the base.

7. System according to any one of the preceding claims, in which each scanning message sent by the base (1) to the detector (5) consists in the establishment by said base, of two-way communication with this detector, the acknowledgement message sent back by the detector being constituted by at least one message received by the detector (5) and confirming that said two-way communication has been successfully established.

8. System according to any one of the preceding claims, in which the time intervals separating two scanning messages to the detector (5), are inferior to 3 minutes.

9. System according to any one of the preceding claims, in which the base central unit (15) is adapted to communicate with a tele-surveillance centre (20), said alarm and checking reactions each comprising the establishment of a communication link between the base (1) and the tele-surveillance centre, and the central unit being adapted to, when it activates one of said alarm or checking reactions and when the public telephone network line is already in communication with other than the tele-surveillance centre, interrupt this communication.

10. System according to claim 9, comprising in addition at least one visual surveillance device (9) which includes an electronic camera (10) and which is adapted to communicate with the base (1) by radio according to the local communication protocol, so that images can be captured and sent to said base, the base being adapted to re-transmit these messages to the tele-surveillance centre (20).

11. System according to claim 9 or 10, furthermore comprises at least one acoustic surveillance device (9) which includes a microphone (11) and which is adapted for radio communication with the base (1) according to the local communication protocol, so that sounds can be captured and sent to said base, the base being adapted to re-transmit these sounds to the tele-surveillance centre (20).

12. System according to any one of the preceding claims, comprising several detectors (5), the base central unit (15) being adapted to :
. memorise detector failures as well as the times when they become defective,
. when said base central unit (15) identifies a detector as defective and activates the control reaction, check if any of the other detectors are defective,
. and in the affirmative, activate said alarm reaction in function of a number of defective detectors and a chronology of failures.

13. System according to any one of the preceding claims, furthermore comprising an interface device (6) allowing communication with a human operator, this interface device being adapted to communicate with the base central unit (15) in accordance with the local communication protocol, and the base central unit being adapted to send break-down messages to this interface device each time a detector is identified as defective.

14. System according to any one of the preceding claims, further comprising a distress call portable unit (21) which is adapted to communicate by radio with the base (1) according to the local communication protocol and which includes means for activating a distress call (22), a loud speaker (23) and a microphone (24).
